# EUROPEAN PATENT SPECIFICATION

(11) **EP 3 823 932 B1**
(45) Date of publication and mention of the grant of the patent: **20.08.2025**
(21) Application number: 19749849.6
(22) Date of filing: 15.07.2019
(51) Int. Cl.: C02F 3/00, C02F 3/12, C02F 3/30

(54) **RAPID GRANULATION FOR THE START-UP OF A WASTEWATER TREATMENT SYSTEM**
SCHNELLE GRANULATION FÜR DIE INBETRIEBNAHME EINER ABWASSERBEHANDLUNGSANLAGE
GRANULATION RAPIDE LORS DU DÉMARRAGE D'UN SYSTÈME DE TRAITEMENT DES EAUX USÉES

(30) Priority: 16.07.2018 NL 2021313
(43) Date of publication of application: 26.05.2021
(73) Proprietor: Haskoning Nederland B.V., 3818 EX Amersfoort (NL)
(72) Inventor: VAN DIJK, Edward John Henrik, 3818 EX Amersfoort (NL); PRONK, Mario, 3818 EX Amersfoort (NL); VAN ERP, Tim Antonius Johannes, 3818 EX Amersfoort (NL)
(74) Representative: Leeger, Ferdinand Christiaan
(86) International application number: PCT/NL2019/050442
(87) International publication number: WO 2020/017956

(56) References cited:
- WO-A1-00/37369
- US-A- 5 288 406
- YUAN X ET AL: "Effect of dissolved oxygen on nitrogen removal and process control in aerobic granular sludge reactor", JOURNAL OF HAZARDOUS MATERIALS, ELSEVIER, AMSTERDAM, NL, vol. 178, no. 1-3, 15 June 2010 (2010-06-15), pages 1041 - 1045, XP026997386, ISSN: 0304-3894, [retrieved on 20100218]

## Description

### FIELD OF THE INVENTION

The invention is in the field of wastewater treatment, in particular to a method of operating a wastewater treatment system for achieving rapid granulation in the start-up of a full-scale aerobic granular sludge system. The invention further makes use of redox and phosphate measurements for controlling the aeration rate of an aerobic phase during the treatment of wastewater. The invention can also be used to optimally control an aerobic granular sludge system for carbon and enhanced biological phosphorus removal whilst preventing nitrification and hence nitrogen removal.

### BACKGROUND OF THE INVENTION

The invention is in the field of wastewater treatment. Wastewater treatment typically involves several stages. During primary treatment, heavy solids may settle on the bottom of a basin and light oily materials may accumulate on the surface of the water. Heavy solids and light oils may be removed and the primary-treated wastewater may be subjected to a secondary treatment, wherein dissolved and suspended biological material may be removed. Secondary treatment may typically be performed using microorganisms that convert biological material being present into sludge. Typically, secondary treatment may include also the removal of pollutants such as phosphates and nitrates and may be combined with a tertiary treatment to further polish the obtained treated wastewater quality. Secondary treatment of wastewater typically involves an anaerobic zone, an anoxic zone, and an aerobic zone, wherein wastewater is contacted with active sludge. The micro-organisms present in the sludge effectuate sludge growth, wherein organic matter is converted into sludge. Surplus sludge may be separated from the treated water by settlement and subsequently discharged from the wastewater treatment plant as waste. Recent improvements however, have managed to use the sludge as a valuable resource.

Prior to start-up of a biological wastewater treatment system, seed sludge is typically added to the reactors. The start-up period can be defined as the period from initial seeding and beginning to process wastewater, through to stable treatment capacity whereby all intended wastewater can be treated through the system. Such a start-up period typically involves acclimatization of the seed sludge and an increase in reactor sludge concentration up to a level that can treat all intended wastewater through the system. Such a start-up period is often referred to as process commissioning of a biological treatment system.

For aerobic granular sludge systems, granular seed sludge can be used for start-up, however sufficient granular seed sludge is often unavailable and expensive. An alternative for aerobic granular sludge systems is to start-up with flocculent seed sludge (activated sludge), which is more readily available, and to subsequently apply conditions that lead to granulation - formation of granular sludge - as the start-up of the system progresses. This granulation process can take a significant period of time - circa 3 to 12 months - to go from a concentration of approximately 1-2 gMLSS/1 of flocculent seed sludge in the reactor to circa 6-12 gMLSS/1 of granular sludge (full design capacity of the system).

Measuring or monitoring concentrations and other parameters during wastewater treatment is well established in the art. These parameters are measured via widely available instrumentation in wastewater treatment processes. Using such instruments to control biological treatment systems, and in particular to control the aeration input to a treatment system is well established.

Processes for treatment of wastewater are for example known from WO 2008/141413, wherein a mixture of wastewater and sludge, downstream of the anaerobic and aerobic zones, is led to a fast settler which operates discontinuously. Settled sludge is transferred to the anaerobic zone and the remainder of the mixture is led to a second settler. An alternative wastewater treatment system is described in US 2014/0144836, wherein part of the sludge formed in the process is subjected to a gravimetric selector. The heavy sludge is fed back to the process while the light sludge is subjected to post-treatment. The remaining part of the mixture of sludge and water is led to a settler and the sludge settled therein is recycled to the start of the treatment process.

AU 2011223510 describes a method for rapid start-up of an aerobic granular reactor, involving using fragments of granules extracted from another operational reactor. This method requires a source of granular seed sludge and is not practical for large full-scale reactors.

Yuan et al. in J. Hazardous Materials, Elsevier, Vol. 178, No. 1-3, p. 1041-1045 recites the effect of dissolved oxygen on nitrogen removal and process control in an aerobic granular sludge reactor, wherein aeration is stopped at the end of the process. ORP is measured to limit a duration of the process. US 5,288,406 A recites a continuous process by which waste water containing low to high concentrations of organic constituents and total nitrogen is biologically purified to such an extent that the organic constituents are minimized, the content of total nitrogen is completely nitrified, if it exceeds the assimilation demand, and the nitrate formed is reduced by aerating the waste water or exposing it to oxygen while not exceeding a preselected redox potential. In the subject process, the expenditure on the oxygen introduction and the expenditure on the denitrification are minimized. Further, the amount of excess sludge produced is extremely small. WO 00/37369 A1 recites a single tank submerged membrane bioreactor for treating feed water having unacceptable levels of ammonia or total nitrogen has both a membrane scouring bubble supply and an oxygenating bubble supply.

An other example of a prior art process can be found in US5288406. A major drawback of these prior art processes is that none of them describe achieving rapid granulation in a full scale aerobic granular treatment plant. Furthermore, these systems do not achieve rapid granulation at the expense of limiting nitrification, which nitrification is a problem in view of unwanted chemical species being formed.

The present invention therefore relates to an improved method of operating a wastewater treatment system, which overcome one or more of the above disadvantages, without jeopardizing functionality and advantages.

### SUMMARY OF THE INVENTION

The present invention relates to a method of operating a wastewater treatment system as defined in the annexed claim 1. The present method provides a speedy start-up of a biological treatment system, which is important (e.g. economically) to enable a new treatment system to provide full capacity within as short a time-frame as possible. For amongst others rapid start-up the present invention makes use a control system that favours rapid granulation in a full-scale aerobic granular sludge system. The invention therefore provides a control method that can substantially shorten the start-up period of a full-scale aerobic granular sludge system.

It has been found that aerobic granular sludge may be formed and maintained in the present wastewater treatment system by favouring slow growing bacteria, such as PAOs (poly-phosphate accumulating organisms), and GAOs (glycogen accumulating organisms), at the expense of OHOs (ordinary heterotopic organisms) which normally tend to grow more rapidly. For wastewater containing phosphorus (which is the case for a majority of domestic or municipal wastewaters, as well as for some industrial wastewaters) it has been found that PAOs are typically prevalent in aerobic granular sludge. The present invention provides a control method that optimally favours PAOs as a key means to achieving rapid granulation. It is found that PAOs may require a switch between aerobic and anaerobic conditions, preferably in a cyclic mode. Under anaerobic conditions PAOs take up volatile fatty acids (VFAs) and store the readily biodegradable Chemical Oxygen Demand (rbCOD) as storage polymers, whilst phosphate is released to gain energy to undertake the aforementioned VFA uptake. Conversely under aerobic conditions the PAOs use the storage polymers to gain energy and grow, whilst phosphate is taken up for the next anaerobic phase.

The invention focusses on methods for operating aerobic granular sludge systems, which may apply a sequential batch process in a reactor, such as without a separate device for secondary clarification or settling. It is noted that fundamental elements of this control methods may also be applied to continuous aerobic granular sludge systems. Furthermore, this invention is focused on start-up and subsequent control of full-scale reactors for the treatment of wastewaters. It is noted that the present control method could also be applied to laboratory scale or pilot scale reactors.

The invention may also be used as an optimal control method for a reactor used to generate seed sludge for other treatment plants and for a reactor where the primary goal is harvesting of excess or waste granular sludge as an input to a sludge beneficiation process, such as the extraction of biopolymers. The invention may be used on aerobic granular sludge systems and may also be applied for optimized control of any biological phosphorus removal system, such as activated sludge systems based on Sequencing Batch Reactor or continuous flow technologies. The invention is therefore versatile.

The method comprises contacting the biomass in the system under anaerobic conditions with a biodegradable organic carbon load forming organically loaded biomass.

A core step of the present invention is that after loading the biomass in the system an aerobic phase (or aerobic step) of a wastewater treatment process is introduced, i.e. a mixture of wastewater and sludge is aerated, hence aerobic. Aeration per se is known in the art and involves the introduction of an oxygen-containing gas in the system, typically in a reaction zone. Any oxygen-containing gas can be used in this respect, but typical examples include oxygen, air, and mixtures thereof. Under such aerobic conditions, degradation of organic material occurs, and typically also ammonium, that may be present in the wastewater, is converted into nitrogen oxides, such as nitrate and nitrite (nitrification). Prior art wastewater treatment processes are typically operated by controlling the amount of oxygen that is introduced during the aerobic phase. Thus, the amount of oxygen being introduced is controlled by the oxygen concentration in the wastewater. Typically, a target value (or set point) of about 1-4 mg oxygen per L wastewater may be used. In case the oxygen concentration drops below this target value the aeration rate, i.e. the amount of oxygen that is introduced, may be increased; likewise this rate is decreased when the oxygen concentration rises above the target value. As such, sufficient oxygen is present during the entire aerobic phase, such that the desired biological processes occur. It has been found that high organic loading (such as in a low sludge age situation) of a biological treatment system, such as a wastewater treatment system, can lead to a loss of nitrification due to washout of nitrifiers. Furthermore, it is found that lower oxygen concentrations limit nitrification.

The present aeration is controlled and maintained by an inventive control method. The control method can also be used beyond start-up of an aerobic granular sludge reactor, to control said reactor to achieve optimal and stable biological phosphorus and carbon removal, whilst limiting nitrification. Such a control method could be applied for aerobic granular sludge systems where there are no nitrogen removal requirements, with the main advantage being optimized (reduced) aeration use through the limiting of nitrification. In the control method oxidation reduction potential (ORP) and phosphate content of the loaded wastewater are monitored. The ORP is maintained in a range of -50mV<ORP<50 mV by increasing or decreasing aeration, based on the monitored ORP and phosphate content, if relevant. It is noted that when loading the system the ORP may be lower than -50mV, but only for a short period of time, as a consequence of loading.

The present method comprises a control that leads to rapid granulation. One benefit of rapid granulation is the ability to complete the start-up period sooner and have the necessary capacity to treat all the intended wastewater. The present invention of optimized control for PAOs and granulation has some key benefits in terms of aeration requirements. Nitrification is suppressed by high loading and redox based aeration control which limits oxygen input to levels lower than those required for extensive nitrification. Nitrification uses oxygen and hence by limiting nitrification less aeration is required, which is a further advantage. Furthermore, for stopping aeration an optimal control is achieved and thereby preventing over-aeration, with associated high aeration energy requirements. The completion of P uptake may be an ideal stopping point for aeration, as this provides favourable condition for PAOs, and may be a point in the cycle when degradation of carbon is sufficiently complete to enable effluent discharge following a separation step. Furthermore, the present control method is found to prevent secondary P release, by stopping aeration as soon as P uptake is complete. Also by limiting the above nitrification the present control also limits NOx formation. As such a limited competition for VFAs by denitrifiers during the feeding phase is achieved, i.e. PAOs can utilize nearly all VFAs in the feed wastewater.

Once a rapid start-up has been achieved and granulation is completed in addition N removal processes may be introduced i.e. a different control system may be applied subsequently, such as in a case when the system has N removal requirements. Alternatively, if the method is intended to only remove carbon (COD), then the method may be continued to provide optimal control of the system, with e.g. optimal aeration energy usage as well as optimal biological phosphorus removal.

The present invention may make use of a number of control elements, such as applying a high organic loading, during an anaerobic feed phase, during a subsequent aeration phase control aeration using redox (ORP), wherein aeration is adjusted accordingly. The ORP set-point is selected to supply enough air (oxygen) for PAOs to undertake their aerobic processes (use of storage polymers for energy generation and growth, as well as phosphate uptake), and preferably to limit nitrification. The aeration phase may be stopped as soon as phosphate uptake is completed. Control of this stopping point may be achieved via a phosphate content measurement instrument, with an associated set-point. Also the stopping point can be based on the redox measurement. And stopping aeration can be based on when aeration reaches a predetermined set-point. It is noted that typically the ORP goes from low to high, a phosphate content goes from high to low, and aeration generally starts high and then goes lower and lower.

In summary inventors optimized process control for phosphorus accumulating organisms (PAO). Inventors operate a system in an ORP windows, which is optimal for PAO's and where these outcompete other organisms by a higher affinity for air; especially nitrifiers are found to need a higher ORP to be active. This range is typically in between -50 mV and +25 mV, preferably closer to +25 mV. It is noted that due to circumstance an ORP can be somewhat higher than +25 mV, but preferably only for a short period (<± 30 minutes).

The present information provides information on growing/taking up phosphate of the PAO's and if these are "finished" doing so. Inventors take into account activities and (average) influent composition, with as a result that the system can run an aeration phase with a fixed duration. By measuring oxygen consumption rate in the reactor it is determined that the process is finished. This could in principle also be done by another method for measuring activity of the sludge. By measuring the phosphate concentration it can also be determined that the process is finished, such as if a phosphate concentration becomes below a set-point. Phosphate can be measured using a PHOSPHAX of Hach. By measuring K⁺ concentration, which is typically a counter ion of phosphate in poly phosphate, a similar result is obtained, and likewise for Mg²⁺ which is also a counter ion.

Thereby the present invention provides a solution to one or more of the above-mentioned problems.

Advantages of the present invention are detailed throughout the description.

### DETAILED DESCRIPTION OF THE INVENTION

The present invention relates to a method according to claim 1.

In the present method during aeration microbial sludge is granulated.

In an exemplary embodiment of the present method steps (a), (b), (c) and (d) are repeated, such as 2-10 times repeated. In these cycles aeration typically takes place during a period of 30 minutes to 12 hours, such as 60 minutes to 6 hours. By repeating a further optimization, e.g. in terms of startup, is achieved.

In an exemplary embodiment of the present method growth of poly-phosphate accumulating organisms (PAOs) during aeration may be favoured. Thereby the built up of sludge is favoured significantly.

In an exemplary embodiment of the present method available nitrogen may be up taken by microorganisms during aeration, such as nitrogen from ammonia, an organic nitrogen source, and urea. Therewith the amount of nitrogen in the wastewater is reduced and nitrification is prevented.

In an exemplary embodiment of the present method (e) sludge may be separated from the wastewater. This might be advantageous, for instance if the sludge finds a further application, or if surplus sludge is removed for proper functioning of the reactor.

In an exemplary embodiment of the present method (f) the aerated wastewater may be treated further. The present method may be considered to provide initial steps in wastewater treatment; the as such pretreated wastewater may be treated further, for instance if required, such as by an anaerobic process generating methane.

In an exemplary embodiment of the present method the ORP may be maintained in a range of -25mV<ORP<30 mV, preferably 0mV<ORP<25 mV, even more preferably 1mV<ORP<24 mV. It has been found that these narrow ranges provide the best results. It is noted that when the aeration starts the ORP may be relatively low and it will generally take several (30-60) minutes for the ORP to increase to levels above -50mV and thus for the PAO's to become active. The ORP in the process control may become higher than +25 mV, but duration thereof is preferably limited (e.g. to less than 1-30 minutes) to ensure nitrifiers don't grow into the sludge. Sometimes nitrification is only limited to a certain extent, and not completely prevented. In this case the ORP range may be stretched somewhat, such as up to +50 mV.

In an exemplary embodiment of the present method aeration may be provided in at least one of a zone of the system, in a phase of operation of the system, and in a reactor of the system. There is some degree of operating freedom in this respect; the goal is to aerate the system appropriately, whereas the precise location is found to somewhat less relevant.

In an exemplary embodiment of the present method the system may be loaded with > 0.5 kg COD, preferably > 1, more preferably >2, per m³ system volume/day.

In the present method phosphate content is monitored by at least one of a PO₄-P content, or a Mg content and a K content in addition to PO4-P content. It has been found that by monitoring the Mg- and K-content, in addition to PO₄-P content, a good indication can be given of the amount of available phosphate present in the wastewater. It is considered that as phosphate salts may be formed, or could be formed, the relevant cations, in this case Mg and K, provide indirect information to the phosphate content.

In the present method the set-point of phosphate content is 20% of an initial value, preferably 10% of the initial value. It is noted that initial values may vary widely, depending on a source of wastewater. For instance for industrial wastewater the phosphate content may be 100 mg/l, whereas for municipal wastewater it may be 10 mg/l.

In the present method the set-point of phosphate content is 1 mg PO₄-P/1, preferably 0.5 mg PO₄-P/l, such as 0.05-0.4 mg PO₄-P/l.

In an exemplary embodiment of the present method the set-point of stopping aeration may be 25%, preferably 20%, such as 10%, relative to a maximum aeration. By closely monitoring the aeration required, relative to for instance a maximum amount, information on the progress of starting up may be obtained. It is found when the aeration has dropped to below 25% it may be considered that the start-up is completed. To be on the safe side, one may wait somewhat longer, until the aeration has dropped to 20%, or even 10%.

In an exemplary embodiment of the present method the aeration rate may be varied in the range 0.05-1 kg O₂/m³/h, preferably 0.1-0.5 kg O₂/m³/h. This range is comparable to a range of 0-1 m³ O₂ per m³ reactor volume per hour (at 25 °C and 100 kPa), preferably 0.05-0.5 m³ O₂, more preferably 0.1-0.4 m³ O₂, even more preferably 0.2-0.3 m³ O₂. So relatively small amounts of oxygen are found to be sufficient already.

In an exemplary embodiment of the present method aeration may be performed by introducing an oxygen-containing gas, preferably air, in a reaction zone comprising the mixture. Instead of pure oxygen also oxygen containing fluids may be used, such as air, which is typically easier.

In an exemplary embodiment of the present method the aeration rate may be adjusted by a conventional or advanced controller type, such as a PI, a PID, a genetic algorithm, a neural network, and a fuzzy logic controller. Fuzzy logic may refer to logic that can handle concepts as "true", "false", and in addition "partially true". Genetic algorithms and neural networks can perform just as well as fuzzy logic in many cases, though fuzzy logic may have as advantage that user experience can be used in the design of the controller. This can make it easier to mechanize tasks that are already successfully performed by humans.

In an exemplary embodiment of the present method the system may be operated batch-wise, continuous, semi-continuous, cyclic, plug-flow, or a combination thereof.

In an exemplary embodiment of the present method the wastewater may be pre-treated prior to step (a), preferably by at least one of clarification, grit removal, fat removal, grease removal, pH-adjustment, and pre-sedimentation.

In an exemplary embodiment of the present method the organic loading rate may be determined without considering the anaerobic cycle time in the case of a batch wise system.

In an exemplary embodiment of the present method the method is incidentally used in the operation of the wastewater treatment to accelerate start-up and/or to improve granular characteristics of the biomass, by applying and maintaining the method during a period of time of less than 12 weeks, preferably less than 6 weeks, such as less than 2 weeks.

In an exemplary embodiment of the present method >3 kg sludge/m³ wastewater may be present, preferably >5 kg sludge/m³, such as >8 kg sludge/m³.

In an exemplary embodiment of the present method the system may be a full-scale system, a laboratory scale reactor, or a pilot scale reactor, and may be selected from at least one of an aerobic granular sludge system, such as a Nereda system.

The invention is further detailed by the accompanying figure and example, which are exemplary and explanatory of nature and are not limiting the scope of the invention. To the person skilled in the art it may be clear that many variants, being obvious or not, may be conceivable falling within the scope of protection, defined by the present claims.

### SUMMARY OF THE FIGURES

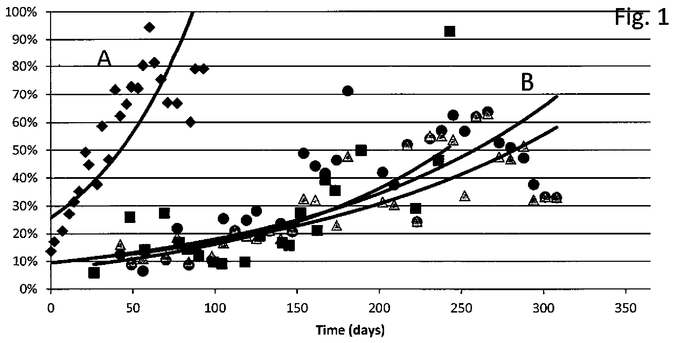

Figure 1-4. Comparative Examples.

### DETAILED DESCRIPTION OF THE FIGURES

Figure 1 shows a plot of granulation (vertical axis, relative to a final stage) versus time for a method according to the invention (A) and methods according to the prior art (B). The present method reaches a level of 40% within 25 days, a level of 60% in about 50 days, and a level of 70% in about 70 days, whereas the prior art systems reach a level of about 20% after 100 days, a level of 40% within 250 days, a level of 60% sometimes in about 300 days, and typically do not reach a level of 70% within the time frame of the measurements. Hence the present method reaches high levels much quicker and also reaches higher levels within the time frame of about a year. Such is considered a significant economical and production benefit.

The figures are further detailed in the description and examples below.

### EXAMPLES/EXPERIMENTS

The below relates to an example of the present invention.

The startup of a pilot-scale Nereda with a working volume of 1000 m³ was studied. This Nereda reactor is located in Utrecht, the Netherlands. The Prototype Nereda Utrecht (PNU) is run with real wastewater, and its effluent is recirculated to the conventional wastewater treatment plant so there is no formal minimal effluent quality to be met.

The influent and effluent streams of the PNU were sampled with an autosampler and multiple probes were installed in the Nereda: an AN-ISE probe for ammonium and nitrate measurement, a PHOSPHAX for PO₄-P measurement, an AMTAX for ammonium measurement, a SONATAX for sludge blanket level measurement, and a SOLITAX for dry solids measurement. These probes collected online data. During normal operation, influent and effluent were also sampled via an autosampler and the 24-hour samples were analyzed.

For startup, the reactor was seeded with one truckload of thickened activated bio-phosphate-removing sludge from de Bilt, the Netherlands. The thickened sludge had been dewatered through treatment with polyelectrolyte solution. After seeding, the reactor was aerated at maximum capacity for 24 hours to break the polyelectrolyte bonds. The following recipe was then applied:
1: Feeding phase
   - Influent feeding at 225 m³/h until a batch size of 200 m³ was reached. The feeding time was 53 minutes.
2: Aeration phase
   - The water level was lowered from 7.1 to 6.9 meters.
   - Aeration took place for at least 30 minutes. Stop condition: PO₄-P 0.5 mg/L or lower OR until 700 minutes elapsed OR a redox value 70 mV.
3: Settling phase
   - Aerate for 5 minutes to mix the reactor
   - Settling: 22 minutes
   - Sludge discharge: discharging until the level is 6.45 m.

PNU sludge was sampled daily during the first aeration phase of the working day. This was done after minimally 15 minutes of aeration to ensure that a well-mixed sample would be obtained. Sludge settling was monitored over sixty minutes by sludge volume (SV) tests. 1 liter of sludge was added to a graded 1 liter measuring cylinder. Size distribution of solids in sludge was determined through sieving of 1L of sample over four sieves with sieve diameters of 200 micrometer, 400 micrometer, 630 micrometer and 1 millimeter. The sieves were stacked in order of smallest to largest, with the smallest diameter sieve at the bottom of the stack. 1L of sludge was then poured over the stack and each sieve was washed with tap water. The fractions caught in each sieve were transferred to weighed aluminum drying dishes and dried overnight at 105 degrees Celsius.

In general, over time the dry solid contents in the PNU reactor accumulated and the phosphate removal capability of the biomass increased. Ammonium concentrations were high, this was expected as the nitrification and denitrification processes were limited to achieve a focus on phosphate removal.

In the first week of operation, the length of the cycle was short, approximately 2.5 hours, due to a short aeration time. Each day of the first week, therefore, nine to ten cycles were completed. This was caused by a low PO₄-P concentration, which caused the aeration stop condition of 0.5 mg/L PO₄-P to be reached quickly. As the PAO presence and the phosphate accumulating capacity of the PNU sludge increased, the length of the cycles also became greater. The cycle length increased to approximately four hours in the second month of startup. In general, during the start-up approximately 8 cycles were completed per day. The average sludge loading rate for the days when COD measurements were taken was calculated to be 0.27 (±0.12) kg COD/(kg TSS day). The sludge volume index is determined by dividing the sludge volume (SV) after 5 and 30 minutes by the dry solids concentration.

The accumulation of large particles in the PNU showed a linear increase for the first two months. The sludge changed from flocculent in the first weeks to granular after 5 weeks, with a subsequent increase in size.

So during the present startup of the PNU, a different strategy than conventionally applied for startup was used. As described this strategy entailed a focus on bio-P removal and limiting of nitrification and denitrification processes. In contrast, prior art startup strategies focus on achieving maximization of both P and N removal. Startups are usually seeded either with discharge sludge from fully started-up Nereda reactors or with conventional activated sludge. The present startup was seeded specifically with bio-P activated sludge, increasing the likelihood that PAOs would be active from the start.

From Figure 1 it can be seen that by far the highest granule content in the first three months was achieved for the present startup of the PNU. Figure 1 compares the granule content for four startups in three locations over the first year of startup. The granule content data points for all four startups can be fit with exponential curves. The result again shows that the present PNU startup achieved high granule contents in a much shorter time span. The three other prior art startups show similar exponential trends, with slow growth of granules until day 100-200 and faster increase after this point. The present PNU trend shows such accelerated granule growth from the start. So the strategy with focus on bio-P removal and limitation of nitrification and denitrification processes achieved a higher granule content in a shorter time than startups applying the conventional startup strategy of both N and P removal.

In summary, within one month of startup, granules with a diameter of >630 µm were observed in the reactor and an almost linear increase in granule-sized solids was recorded over the first two months of startup time. This result was compared to that of previous startups of the PNU. An earlier start up that did not apply the bio-P removal focused strategy, but a conventional strategy with a focus on both phosphate and nitrogen removal, achieved a much lower rate of granulation in the first months. A further comparison was made to other startups that had applied the conventional startup strategy. In all cases, the current PNU startup achieved the highest granule percentages in the shortest time.

## Claims

1. A method of operating a wastewater treatment system for achieving rapid granulation in the start-up thereof, wherein said system is a full-scale aerobic granular sludge system, comprising
(a) contacting biomass in the system with a biodegradable organic carbon load under anaerobic conditions forming organically loaded biomass, thereafter
(b) aerating the biomass loaded system and monitoring oxidation reduction potential (ORP) and phosphate content of the loaded wastewater, wherein phosphate content is monitored by PO₄-P content, or a Mg content and a K content in addition to PO₄-P content,
(c) continuously maintaining the ORP in a range of - 50mV<ORP<50 mV by increasing or decreasing aeration, based on monitored ORP; and
(d) stopping aeration if the phosphate content drops below a pre-determined set-point, wherein the set-point of phosphate content is 20% of an initial value or 1 mg PO₄-P/l, or wherein the set-point of phosphate content is 10% of the initial value or 0.5 mg PO₄-P/l, or if aeration reaches a predetermined set-point.

2. Method according to claim 1, wherein steps (a), (b), (c) and (d) are repeated.

3. Method according to any of claims 1-2, wherein aeration is switched between aerobic and anaerobic conditions, preferably in a cyclic mode.

4. Method according to any of claims 1-3, wherein available nitrogen is up taken by microorganisms during aeration.

5. Method according to any of claims 1-4, wherein the aerated wastewater is treated further by an anaerobic process generating methane.

6. Method according to any of claims 1-5, wherein the system is loaded with > 0.5 kg COD per m³ system volume/day.

7. Method according to any of claims 1-6, wherein the set-point of stopping aeration is 25% relative to a maximum aeration.

8. Method according to any of claims 1-7, wherein the aeration rate is varied in the range of 0.05-1 kg O₂/m³/h

9. Method according to any of claims 1-8, wherein aeration is performed by introducing an oxygen-containing gas in a reaction zone comprising the mixture.

10. Method according to any of claims 1-9, wherein the wastewater is pre-treated prior to step (a), by at least one of clarification, grit removal, fat removal, grease removal, pH-adjustment, and pre-sedimentation.

11. A method according to any of claims 1-10, wherein >3 kg sludge/m³ wastewater is present.

## Patentansprüche

1. Verfahren zum Betreiben eines Abwasserbehandlungssystems zum Erzielen einer schnellen Granulation bei dessen Inbetriebnahme, wobei das System ein vollmaßstäbliches aerobes Granularschlammsystem ist, aufweisend
(a) Inkontaktbringen von Biomasse in dem System mit einer biologisch abbaubaren organischen Kohlenstofffracht unter anaeroben Bedingungen, wobei organisch belastete Biomasse gebildet wird, danach
(b) Belüften des mit Biomasse belasteten Systems und Überwachen des Oxidations-Reduktions-Potentials (ORP) und des Phosphatgehalts des belasteten Abwassers, wobei der Phosphatgehalt durch den P0₄-P-Gehalt oder einen Mg-Gehalt und einen K-Gehalt zusätzlich zu dem P0₄-P-Gehalt überwacht wird,
(c) kontinuierliches Aufrechterhalten des ORPs in einem Bereich von -50 mV<ORP<50 mV durch Erhöhen oder Verringern der Belüftung, basierend auf dem überwachten ORP; und
(d) Stoppen der Belüftung, wenn der Phosphatgehalt unter einen vorbestimmten Sollwert fällt, wobei der Sollwert des Phosphatgehalts 20 % eines Anfangswerts oder 1 mg P0₄-P/l beträgt, oder wobei der Sollwert des Phosphatgehalts 10 % des Anfangswerts oder 0,5 mg P0₄-P/l beträgt, oder wenn die Belüftung einen vorbestimmten Sollwert erreicht.

2. Verfahren nach Anspruch 1, wobei die Schritte (a), (b), (c) und (d) wiederholt werden.

3. Verfahren nach einem der Ansprüche 1-2, wobei die Belüftung zwischen aeroben und anaeroben Bedingungen umgeschaltet wird, vorzugsweise in einem zyklischen Modus.

4. Verfahren nach einem der Ansprüche 1-3, wobei verfügbarer Stickstoff während der Belüftung von Mikroorganismen aufgenommen wird.

5. Verfahren nach einem der Ansprüche 1-4, wobei das belüftete Abwasser durch einen anaeroben Prozess, der Methan erzeugt, weiter behandelt wird.

6. Verfahren nach einem der Ansprüche 1-5, wobei das System mit > 0,5 kg CSB pro m³ Systemvolumen/Tag belastet wird.

7. Verfahren nach einem der Ansprüche 1-6, wobei der Sollwert zum Stoppen der Belüftung 25 % relativ zu einer maximalen Belüftung beträgt.

8. Verfahren nach einem der Ansprüche 1-7, wobei die Belüftungsrate im Bereich von 0,05-1 kg 0₂/m³/h variiert wird.

9. Verfahren nach einem der Ansprüche 1-8, wobei die Belüftung durch Einleiten eines sauerstoffhaltigen Gases in eine Reaktionszone, die die Mischung umfasst, durchgeführt wird.

10. Verfahren nach einem der Ansprüche 1-9, wobei das Abwasser vor Schritt (a) durch mindestens eine der folgenden Maßnahmen vorbehandelt wird: Klärung, Sand-Entfernung, FettEntfernung, Schmierfett-Entfernung, pH-Einstellung und Vorsedimentation.

11. Verfahren nach einem der Ansprüche 1-10, wobei >3 kg Schlamm/m³ Abwasser vorhanden sind.

## Revendications

1. Procédé d'exploitation d'un système de traitement des eaux usées pour obtenir une granulation rapide au démarrage de celui-ci, dans lequel ledit système est un système de boues granulaires aérobies à grande échelle, comprenant
(a) la mise en contact d'une biomasse dans le système avec une charge de carbone organique biodégradable dans des conditions anaérobies formant une biomasse chargée organiquement, puis
(b) l'aération du système chargé de biomasse et la surveillance d'un potentiel d'oxydoréduction (POR) et de la teneur en phosphates des eaux usées chargées, dans lequel la teneur en phosphates est surveillée par une teneur en PO₄-P, ou une teneur en Mg et une teneur en K en plus de la teneur en PO₄-P,
(c) le maintien continu du POR dans une plage de - 50 mV < POR < 50 mV par augmentation ou diminution de l'aération, sur la base du POR surveillé ; et
(d) l'arrêt de l'aération si la teneur en phosphates chute en dessous d'un point de consigne prédéterminé, dans lequel le point de consigne de la teneur en phosphates représente 20 % d'une valeur initiale ou 1 mg PO₄-P/1, ou dans lequel le point de consigne de la teneur en phosphates représente 10 % de la valeur initiale ou 0,5 mg PO₄-P/1, ou si l'aération atteint un point de consigne prédéterminé.

2. Procédé selon la revendication 1, dans lequel les étapes (a), (b), (c) et (d) sont répétées.

3. Procédé selon l'une quelconque des revendications 1 à 2, dans lequel l'aération est commutée entre des conditions aérobies et anaérobies, de préférence dans un mode cyclique.

4. Procédé selon l'une quelconque des revendications 1 à 3, dans lequel l'azote disponible est absorbé par des microorganismes pendant l'aération.

5. Procédé selon l'une quelconque des revendications 1 à 4, dans lequel les eaux usées aérées sont en outre traitées par un processus anaérobie générant du méthane.

6. Procédé selon l'une quelconque des revendications 1 à 5, dans lequel le système est chargé avec > 0,5 kg de DCO par m³ de volume de système/jour.

7. Procédé selon l'une quelconque des revendications 1 à 6, dans lequel le point de consigne d'arrêt de l'aération est de 25 % par rapport à une aération maximale.

8. Procédé selon l'une quelconque des revendications 1 à 7, dans lequel le taux d'aération varie dans la plage de 0,05-1 kg O₂/m³/h

9. Procédé selon l'une quelconque des revendications 1 à 8, dans lequel l'aération est réalisée par introduction d'un gaz contenant de l'oxygène dans une zone de réaction comprenant le mélange.

10. Procédé selon l'une quelconque des revendications 1 à 9, dans lequel les eaux usées sont prétraitées avant l'étape (a) par au moins un parmi une clarification, un dessablage, un dégraissage, un déshuilage, un ajustement du pH et une présédimentation.

11. Procédé selon l'une quelconque des revendications 1 à 10, dans lequel > 3 kg de boues/m³ d'eaux usées sont présentes.
